# EUROPEAN PATENT APPLICATION

(11) **EP 2 851 717 A1**
(43) Date of publication of application: **25.03.2015**
(21) Application number: 13800100.3
(22) Date of filing: 29.05.2013
(51) Int. Cl.: G02B 6/00, G02B 5/04

(54) **LIGHT GUIDING DEVICE, LIGHT EMITTING APPARATUS, ELECTRONIC APPARATUS AND KEY**

(30) Priority: 06.06.2012 CN 201210184148
(71) Applicant: Huawei Device Co., Ltd., Longgang District Shenzhen Guangdong 518129 (CN)
(72) Inventor: CHENG, Liangjun, Shenzhen Guangdong 518129 (CN); XIA, Honghua, Shenzhen Guangdong 518129 (CN)
(74) Representative: Pfenning, Meinig & Partner GbR
(86) International application number: PCT/CN2013/076403
(87) International publication number: WO 2013/182003

(57) **Abstract**

The present invention provides a light guiding apparatus, a light emitting device, an electronic device, and a key. The light guiding apparatus includes: a light guiding body, where a prism structure is disposed in the light guiding body, and the prism structure is configured to reflect light that enters the light guiding body; and the light guiding body has a light incident surface and a light emitting surface, where the light incident surface is an irregular surface matched with the prism structure and is configured to reflect light, which is reflected back from the prism structure, to the light emitting surface. The light guiding apparatus provided in the embodiments of the present invention can effectively scatter incident beams emitted by a light source, so that uniform emergent light can be obtained.

## Description

This application claims priority to Chinese Patent Application No.201210184148.6, filed with Chinese Patent Office on June 6, 2012 and entitled "LIGHT GUIDING APPARATUS, LIGHT EMITTING DEVICE, ELECTRONIC DEVICE, AND KEY", which is incorporated herein by reference in its entirety.

### TECHNICAL FIELD

Embodiments of the present invention relate to light guiding technologies, and in particular, to a light guiding apparatus, a light emitting device, an electronic device, and a key.

### BACKGROUND

Electronic products have been widely applied. To meet the needs of electronic product designs or functions, various light emitting devices are generally disposed in electronic products to achieve desired lighting effects. For example, for keys on an electronic product, to meet a use requirement in a dark environment, for example, as at night, light needs to be generated on the keys, so that, when the electronic product is used at night, positions and functions of the keys can be observed, which is convenient for operations on the keys.

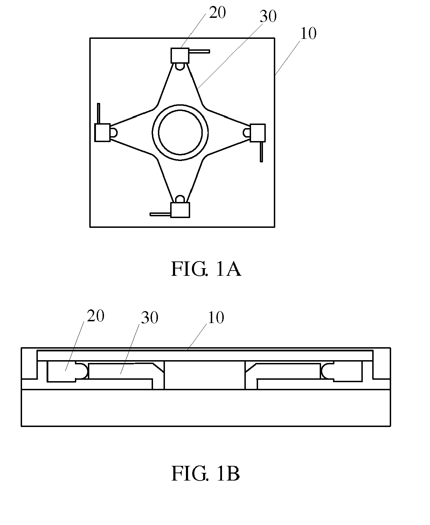

At present, keys of an electronic product are generally embedded in a surface of the electronic product, and upper surfaces of the keys are generally parallel to an outer surface of the electronic product. In a dark environment, for example, at night, if there is no light, the keys cannot be identified. To overcome this problem, light emitting devices are generally disposed at positions of the keys, so as to generate annular light on edges of the keys. Generation of annular light is generally implemented by using a light guiding structure. FIG. 1A is a schematic diagram of an existing light guiding structure that generates annular light; FIG. 1B is a cutaway drawing of FIG. 1A in an A-A direction. As shown in FIG. 1A and FIG. 1B, to generate annular light on edges of a key 10, four LED lamps 20 are disposed around the key 10, a light pipe 30 is disposed between each LED lamp 20 and an edge of the key 10, and four light pipes 30 form an annular structure on the edges of the key 10. The four light pipes 30 is the light guiding structure, and can guide light emitted by the LED lamps 20 to the edges of the key 10, so as to generate annular light and highlight a position of the key 10; moreover, key function information such as a character on the key may be viewed with the help of the emitted light. In addition, the prior art further provides an annular light guiding structure, which is disposed around edges of a key. The annular light guiding structure can provide annular light by using LED lamps disposed below the annular light guiding structure. Moreover, to improve luminescence uniformity of the annular light, the annular light guiding structure is further mixed with astigmatism powder, and four or more LED lamps are evenly disposed at a lower end of the annular light guiding structure.

However, when an existing light guiding structure that generates annular light is used, to achieve a better lighting effect and improve uniformity of the annular light, four or more than four LED lamps are generally disposed, which not only increases a volume of a light emitting device but also increase energy consumption of the light emitting device.

### SUMMARY

Embodiments of the present invention provide a light guiding apparatus, a light emitting device, an electronic device, and a key, which can effectively improve light guiding uniformity of a light guiding structure, reduce the number of used light sources, and reduce energy consumption.

An embodiment of the present invention provides a light guiding apparatus, including:
a light guiding body, where a prism structure is disposed in the light guiding body, and the prism structure is configured to reflect light that enters the light guiding body; and
the light guiding body has a light incident surface and a light emitting surface, where the light incident surface is an irregular surface matched with the prism structure and is configured to reflect light, which is reflected back from the prism structure, to the light emitting surface.

An embodiment of the present invention further provides a light emitting device, where the light emitting device includes a light guiding apparatus and a light source, and the light guiding apparatus is the light guiding apparatus provided in the foregoing embodiment of the present invention; and
the light source is disposed at a position opposite to a prism structure in the light guiding apparatus.

In addition, an embodiment of the present invention further provides an electronic device, where the electronic device includes the light emitting device provided in the foregoing embodiment of the present invention.

Further, an embodiment of the present invention further provides a key, where the key includes the light guiding apparatus provided in the foregoing embodiment of the present invention, and a key part is disposed on a light emitting surface of a light guiding body of the light guiding apparatus.

In the embodiments of the present invention, a prism structure and a light incident surface matched with the prism structure are disposed in a light guiding body to reflect light that enters the light guiding body, so that diffusion processing on the light may be implemented in the light guiding body, and incident beams emitted by a light source may be uniformly scattered and sent out from a light emitting surface of the light guiding body. Therefore, the number of used light sources can be reduced, and a purpose of uniform luminescence can be achieved, which is especially suitable for light emitting devices that are used as annular lamps. This can effectively simplify a light guiding structure, reduce the volume of a light emitting device, reduce the number of used light sources, reduce energy consumption of the light emitting device, and also provide a good light guiding effect.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1A is a schematic diagram of an existing light guiding structure that generates annular light;
FIG. 1B is a cutaway drawing of FIG. 1A in an A-A direction;
FIG. 2A is a schematic diagram of a three-dimensional structure of a light guiding apparatus in one direction according to Embodiment 1 of the present invention;
FIG. 2B is a schematic diagram of the three-dimensional structure of the light guiding apparatus in another direction according to Embodiment 1 of the present invention;
FIG. 2C is a schematic structural diagram of the light guiding apparatus used with a light source according to Embodiment 1 of the present invention;
FIG. 3 is a schematic diagram of a working principle of a light guiding apparatus according to an embodiment of the present invention; and
FIG. 4 is a schematic cross-sectional structural diagram of a light guiding apparatus applied in an electronic device according to an embodiment of the present invention.

### DESCRIPTION OF EMBODIMENTS

To make the objectives, technical solutions, and advantages of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

An embodiment of the present invention provides a light guiding apparatus, where a prism structure may be disposed in the light guiding apparatus, where the prism structure is utilized to reflect light that enters a light guiding body, and, by improving a surface shape of the light guiding body, the light reflected by the prism structure may be further reflected to a light emitting surface of the light guiding body. Specifically, the light guiding apparatus may include a light guiding body, where a prism structure is disposed in the light guiding body, and the prism structure may be configured to reflect light that enters the light guiding body; and the light guiding body has a light incident surface and a light emitting surface, where the light incident surface is an irregular surface matched with the prism structure and is configured to reflect light, which is reflected back from the prism structure, to the light emitting surface of the light guiding body. The light guiding apparatus provided in this embodiment of the present invention may use the prism structure and the irregular light incident surface matched with the prism structure to reflect some light, which enters the light guiding body through the light incident surface, of a light source disposed on a side of the light incident surface, so as to scatter the light. This may make beams emitted by the light source uniformly scattered to the light emitting surface of the light guiding body, so that uniform light may be sent out from the light emitting surface of the light guiding body.

The following describes technical solutions of embodiments of the present invention in detail by using specific examples with reference to the accompanying drawings.

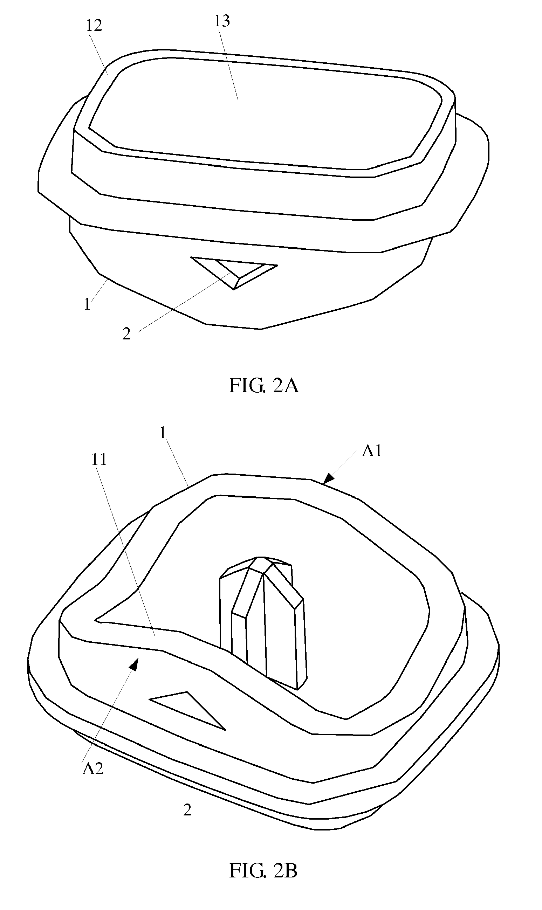

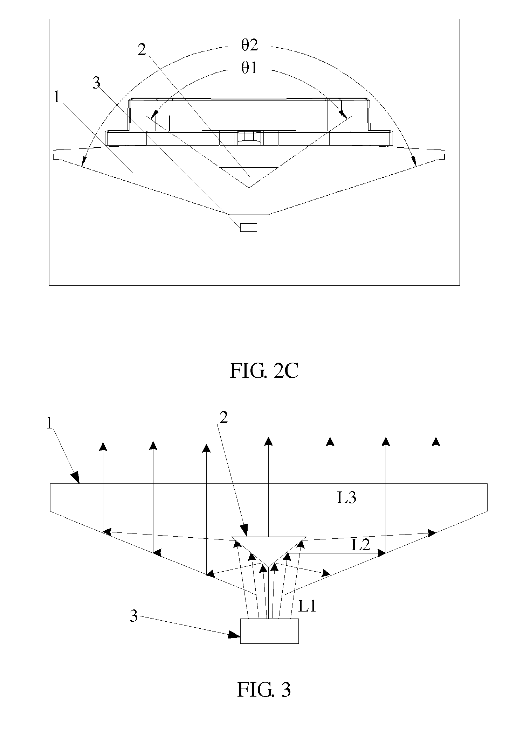

FIG. 2A is a schematic diagram of a three-dimensional structure of a light guiding apparatus in one direction according to Embodiment 1 of the present invention; FIG. 2B is a schematic diagram of the three-dimensional structure of the light guiding apparatus in another direction according to Embodiment 1 of the present invention; FIG. 2C is a schematic structural diagram of the light guiding apparatus used with a light source according to Embodiment 1 of the present invention; and FIG. 3 is a schematic diagram of a working principle of a light guiding apparatus according to an embodiment of the present invention. As shown in FIG. 2A to FIG. 2C, the light guiding apparatus in this embodiment includes a light guiding body 1, where the light guiding body 1 is an annular light guiding structure. Specifically, the light guiding body 1 in this embodiment is a rectangular ring structure; a prism structure is separately disposed on a light guiding part A1 and a light guiding part A2 on two opposite sides of the light guiding body 1, and the prism structure is a triangular opening 2 arranged in the light guiding body 1; and a light incident surface 11 of the light guiding body 1, that is, a surface on a side opposite to a light source 3 disposed at a lower end of the light guiding body 1, is a V-shaped surface matched with the triangular opening 2. In this embodiment, light incident surfaces of the light guiding part A1 and the light guiding part A2 are both V-shaped surfaces, so as to match with the triangular opening 2; and after light reflected by the triangular opening 2 is reflected again, the light is sent out from a light emitting surface 12 corresponding to the light guiding body 1.

When the light guiding apparatus in this embodiment is used, as shown in FIG. 2C and FIG. 3, the light source 3 is located right below the triangular opening 2, and a vertex angle of the triangular opening 2 is right in front of the light source 3. In this way, light emitted by the light source 3 enters the light guiding body 1 at a incidence angle, and is totally reflected by a surface of the triangular opening 2; light after being totally reflected is transmitted to the light incident surface 11 again, and the light transmitted to the light incident surface 11 is further totally reflected to the light emitting surface 12 of the light guiding body 1. The light of the light source 3 that enters the light guiding body 1 is light L1 shown in FIG. 3, the light after being totally reflected by the triangular opening 2 is light L2 shown in FIG. 3, and the light after being totally reflected by the light incident surface 12 of the light guiding body 1 is light L3 shown in FIG. 3. A person skilled in the art may understand that in the light L1, only light that meets an incidence angle condition is totally reflected by the triangular opening 2, or some light is reflected and refracted.

In this embodiment, light emitted by the light source 3 passes through the triangular opening 2 in the light guiding body 1, and a reflection phenomenon occurs, so that diffusion processing is implemented on the light once; in addition, for light reflected by the triangular opening 2, diffused light in the light guiding body 1 may further be totally reflected by the V-shaped light incident surface 11, and finally the light is sent out from the light emitting surface 12 of the light guiding body 1. It may be seen that in the light guiding body 1, light is reflected by the prism structure, that is, the triangular opening 2, so that the light is diffused in the light guiding body 1. In this way, light sent out from the light emitting surface 12 of the light guiding body 1 is more uniform, and as long as a light source 3 is separately disposed on the light guiding part A1 and the light guiding part A2, uniform annular light can be generated on an annular light guiding surface 12 of the light guiding body 1, so that the number of used light sources may be reduced.

In this embodiment, the light guiding body 1 is integrated on a key and can be used as a part of the key. As shown in FIG. 2A to FIG. 2C, a key part 13 is disposed on an upper surface of the light guiding body 1, and the key part 13 and the light guiding body 1 are fabricated as one whole body. A shading area may be arranged in an area on the key part 13, except for a position corresponding to the light emitting surface of the light guiding body 1, so that an annular translucent area is formed. In this way, light sent out from the light emitting surface of the light guiding body may be sent out through the annular translucent area, and annular light is formed, so as to meet a lighting requirement of the key.

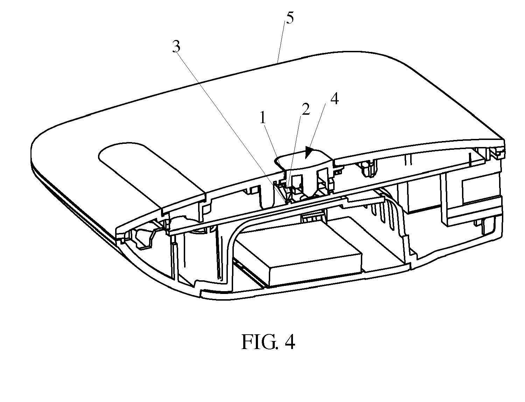

FIG. 4 is a schematic cross-sectional structural diagram of a light guiding apparatus applied in an electronic device according to an embodiment of the present invention. As shown in FIG. 4, the light guiding apparatus in this embodiment is integrated onto a key 4 and applied in an electronic device 5. A light source 3 is located at a lower position that is in the light guiding apparatus and opposite to a triangular opening 2, and is configured to provide light. The light source 3 is an LED lamp, and a supporting part that cooperates with the electronic device 5 is disposed on the key 4. In this way, when the electronic device 5 operates, the light source 3 may be controlled; after entering a light guiding body 1, light emitted by the light source 3 may be totally reflected twice by the triangular opening 2 and a light incident surface (not shown in the figure) in the light guiding body 1; finally, annular light is sent out from an annular lighting area at an upper part of the key 4.

In this embodiment, to enable light in the light guiding body 1 to be totally reflected by a surface of the triangular opening 2 and the light incident surface 12, so that all or most of light can be sent out from the light emitting surface 12 of the light guiding body 1, where a refractive index of the light guiding body 1 should be greater than a refractive index of air; in addition, an incidence angle of light of a light source that enters the light guiding body 1 and that is transmitted to the surface of the triangular opening 2 should be greater than a critical angle (that is, a minimum angle at which light can be totally reflected in the light guiding body) of the light guiding body. Likewise, an incidence angle of light that is transmitted to the light incident surface 12 of the light guiding body 1 after being reflected by the surface of the triangular opening 2 should be greater than the critical angle of the light guiding body. To meet the foregoing conditions, the light guiding body 1 may be made of a material whose refractive index is greater than the refractive index of air; a distance between the light source 3 and the triangular opening 2, and angles of a triangle in a structure of the triangular opening 2 should be arranged properly, so that most of light emitted by the light source 3 can be transmitted to the surface of the triangular opening 2 in the light guiding body 1 at an incidence angle greater than the critical angle of the light guiding body, and most of the light can be totally reflected by the surface of the triangular opening 2; the structure of the triangular opening 2 should be matched with the V-shaped light incident surface 12, that is, a V-shaped angle of the light incident surface 12 should be arranged properly, so that light reflected by the structure of the triangular opening 2 to the light incident surface 12 can be totally reflected by the light incident surface 12 and sent out from the light emitting surface 12 of the light guiding body 1.

In a practical application, the light guiding body may be made of acrylic PMMA or polycarbonate PC, where a refractive index of PMMA is 1.48 to 1.5, a refractive index of PC is 1.59, and the refractive index of air is 1.0; an incidence angle, that is, a critical angle, at which total reflection occurs on PMMA is 42 degrees, and an incidence angle, that is, a critical angle, at which total reflection occurs on PC is 39 degrees. Therefore, a size of the triangular opening, a size of the V-shaped light incident surface, and a distance between the light source and the light guiding body may be properly arranged according to used materials with different refractive indexes. For light guiding bodies that use materials with different refractive indexes, a person skilled in the art may set a size of a triangular opening, a size of a V-shaped light incident surface, and a distance between a light source and the light guiding body according to actual conditions, and details are not described herein again.

Preferably, a light guiding body made of a PMMA material is used in this embodiment. Specifically, as shown in FIG. 2C, in a structure of a triangular opening 2, an angle opposite to a light source 3 is θ1=110°, a V-shaped included angle of a light incident surface 12 is θ2=144°, and an end of the light incident surface 12 is a plane, so that light emitted by the light source 3 can be directly transmitted into the light guiding body 1.

A person skilled in the art may understand that the foregoing light source that cooperates with the light guiding apparatus is a point light source, and may be specifically an LED lamp; in addition, the prism in the light guiding apparatus may not only diffuse light emitted by the light source to implement uniform emergent light, but also effectively attenuate intensity of light at a position corresponding to the light source, so that light sent out from a light emitting surface is more uniform and softer.

A person skilled in the art may understand that a diffusion extent of light in a light guiding body may be properly adjusted by properly configuring a distance between a light source and a triangular opening and an angle of a V-shaped light incident surface, so that uniformity of light sent out from a light emitting surface of the light guiding body may be adjusted; in addition, light of the light source enters the light guiding body at different angles, and actually, only part of the light is diffused in the light guiding body at different angles because of a prism structure. After being reflected twice by the prism structure and the light emitting surface, beams emitted by one light source may form a lighting effect with a large area or a large distance. Therefore, for a light guiding body in an annular structure, an annular lighting effect with uniform light may be formed by only disposing two light sources.

A person skilled in the art may understand that, besides the triangular opening structure shown in FIG. 2A to FIG. 2C, a prism structure disposed in a light guiding body 1 may also be in a shape of another structure, as long as incident light emitted by a light source can be totally reflected. Accordingly, as the prism structure varies, a shape of a light incident surface of the light guiding body should also be adjusted for matching, so as to ensure that light in the light guiding body can be uniformly sent out from a light emitting surface of the light guiding body. In addition, the prism structure may also be a prism made of other translucent materials, as long as a refractive index of the material of the prism is less than a refractive index of the light guiding body. This embodiment constitutes no special limitation thereon.

A person skilled in the art may understand that, besides the rectangular ring structure shown in FIG. 2A to FIG. 2C, a structure of a light guiding body may also be in another shape, for example, a circular, rectangular, or irregular shape; as long as a prism structure is disposed in the structure of the light guiding body, and matching settings are performed on a shape of a light incident surface, light that enters the structure of the light guiding body can be reflected for multiple times, and beams emitted by a light source are uniformly sent out from a light emitting surface of the light guiding body.

In conclusion, in a light guiding apparatus provided in this embodiment, a prism structure and a light incident surface matched with the prism structure are disposed in a light guiding body to reflect light that enters the light guiding body, so that diffusion processing on the light may be implemented in the light guiding body, and incident beams emitted by a light source may be uniformly scattered and sent out from a light emitting surface of the light guiding body. Therefore, the number of used light sources can be reduced, and a purpose of uniform luminescence can be achieved, which is especially suitable for light emitting devices that are used as annular lamps. This can effectively simplify a light guiding structure, reduce the volume of a light emitting device, reduce the number of used light sources, reduce energy consumption of the light emitting device, and also provide a good light guiding effect.

In addition, the present invention further provides a light emitting device, where the light emitting device includes a light guiding apparatus and a light source. The light guiding apparatus is the light guiding apparatus provided in the foregoing embodiment of the present invention; the light source is disposed at a position opposite to a prism structure in the light guiding apparatus, and is configured to provide a light source for the light guiding apparatus.

Further, the present invention further provides an electronic device, where the electronic device includes the foregoing light emitting device. The electronic device may be specifically various communication terminals such as a mobile phone and a tablet computer, or various communications network devices, household electrical appliances, and the like. The light emitting device may be used as a light emitting unit on the electronic device, and is configured to implement a status indication or light decoration function. A specific structure of the light emitting device is not described herein again.

In addition, the present invention further provides a key, where the key includes a light guiding apparatus. The light guiding apparatus may use the light guiding apparatus provided in the foregoing embodiment of the present invention. A key part may be disposed on a light emitting surface of a light guiding body of the light guiding apparatus, and the key part and the light guiding body may be fabricated as one whole body. For one implementation manner, reference may be made to the structure shown in FIG. 2A to FIG. 2C. For details, reference may be made to description of the foregoing embodiment of the light guiding apparatus, and details are not described herein again.

In a practical application, the key may be made of a translucent material such as PC or PMMA, the light guiding apparatus described in this embodiment is disposed on the key, and an annular translucent area may be obtained by means of silkscreen or spraying and laser carving on the top of the key, that is, a keycap. In this way, light emitted by a light source can be reflected twice by using a prism structure in the light guiding apparatus and a shape of a light incident surface, and then uniform annular light can be sent out from the annular translucent area.

Finally, it should be noted that the foregoing embodiments are merely intended to describe the technical solutions of the present invention, but not to limit the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A light guiding apparatus, comprising:
a light guiding body, wherein a prism structure is disposed in the light guiding body, and the prism structure is configured to reflect light that enters the light guiding body; and
the light guiding body has a light incident surface and a light emitting surface, wherein the light incident surface is an irregular surface matched with the prism structure and is configured to reflect light reflected back from the prism structure, to the light emitting surface

2. The light guiding apparatus according to claim 1, wherein the prism structure is a triangular prism structure.

3. The light guiding apparatus according to claim 2, wherein the prism structure is a triangular opening structure arranged in the light guiding body.

4. The light guiding apparatus according to claim 3, wherein in the triangular opening structure, a vertex angle of a triangular opening is corresponding to the light source; and
the light incident surface is a V-shaped surface whose shape is matched with the triangular opening structure.

5. The light guiding apparatus according to any one of claims 1-4, wherein the light guiding body is an annular light guiding body; and
a prism structure is separately disposed on two opposite sides of the annular light guiding body.

6. The light guiding apparatus according to claim 5, wherein the annular light guiding body is a rectangular ring structure.

7. The light guiding apparatus according to claim 1, wherein the light guiding body is made of an acrylic material or a polycarbonate material.

8. A light emitting device, comprising a light guiding apparatus and a light source, wherein the light guiding apparatus is the light guiding apparatus according to any one of claims 1-7; and
the light source is disposed at a position opposite to a prism structure in the light guiding apparatus.

9. An electronic device, comprising the light emitting device according to claim 8.

10. A key, comprising the light guiding apparatus according to any one of claims 1-7, wherein a key part is disposed on a light emitting surface of a light guiding body of the light guiding apparatus.
